Europäisches Patentamt

**European Patent Office**

Office européen des brevets

(11) Publication number : **0 340 534 B1**

# EUROPEAN PATENT SPECIFICATION

(45) Date of publication of patent specification :
16.09.92 Bulletin 92/38

(51) Int. Cl.⁵ : **B60T 13/52**

(21) Application number : **89107023.7**

(22) Date of filing : **19.04.89**

(54) **Mounting device for a pneumatic booster.**

(30) Priority : **19.04.88 JP 52667/88**

(43) Date of publication of application :
**08.11.89 Bulletin 89/45**

(45) Publication of the grant of the patent :
**16.09.92 Bulletin 92/38**

(84) Designated Contracting States :
**DE FR GB IT**

(56) References cited :
**EP-A- 0 121 114**
**EP-A- 0 215 586**
**GB-A- 2 160 603**
**US-A- 2 977 935**

(73) Proprietor : **TOKICO LTD.**
**6-3, Fujimi, 1-Chome Kawasaki-Ku**
**Kawasaki-shi Kanagawa-ken (JP)**

(72) Inventor : **Endo, Mitsuhiro**
**320, Nakagouchi**
**Ebina-shi Kanagawa-ken (JP)**
Inventor : **Ishimaki, Takashi**
**708-32, Kamimiyaji Kushigatacho**
**Nakagoma-gun Yamanashi-ken (JP)**

(74) Representative : **Füchsle, Klaus, Dipl.-Ing. et al**
**Hoffmann . Eitle & Partner Patentanwälte**
**Arabellastrasse 4**
**W-8000 München 81 (DE)**

## Description

The present invention relates to a mounting device for mounting a pneumatic booster to be used in the brake system of a vehicle such as an automobile on the toe board of the vehicle body.

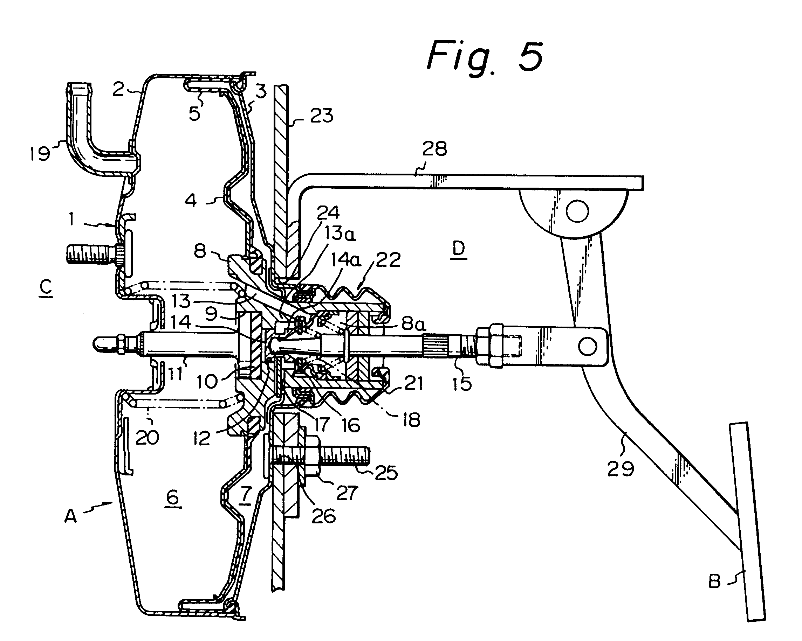

A pneumatic booster is generally constructed with a structure such as that shown in Fig. 5. In the figure, reference numeral I designates the housing of a pneumatic booster A which consists of a front shell 2 and a rear shell 3. The interior of the housing I is divided into front and rear chambers 6 and 7, respectively, by a diaphragm 5 which carries a power piston 4. A valve body 8 is fixedly secured to the power piston 4 and a large diameter base portion of an output shaft II is received in a large diameter bore portion 9 of the valve body 8 through a reaction disc I0. The valve body 8 is also provided with a small diameter bore portion I2 formed therein and communicating with the large diameter bore portion 9 and a negative pressure passage I3 communicating between the rear chamber 6 and a hollow portion 8a formed in the rear portion of the valve body 8. In the small diameter hole portion I2 is slidably disposed a plunger I4, to the rear end of which is connected one end of an input rod I5 which is adapted to interlock with a brake pedal B (to be explained later).

Valve seats I4a and I3a are respectively formed on the rear end of the plunger I4 and the opening end of the negative pressure passage I3 opening to the hollow portion 8a, while a poppet valve I6 is disposed in the hollow portion 8a of the valve body 8 so as to seat on and to separate from the valve seats I4a and I3a. The valve body 8 is also provided with a vent passage I7 communicating between the rear chamber 7 and the hollow portion 8a. The air passage I7 and the negative pressure passage I3 are both closed when the poppet valve I6 is seated on the valve seats I4a and I3a. The poppet valve I6 is permanently biased toward the valve seats I4a and I3a by a spring I8. A conduit I9 is connected to the front chamber 6 so as to introduce negative pressure from, for example, the intake manifold of the engine into the front chamber 6. A return spring 20 is also disposed in the front chamber 6 for forcing the power piston 4 toward a non-actuated position.

In the pneumatic booster A having a constitution such as that explained above, the valve body 8 extends rearward through the rear shell 3 and a boot 2I is arranged to surround the extending portion of the valve body 8, thereby defining an axial portion 22. During installation the booster A is mounted on the toe board 23 of the vehicle body (not shown) with the axial portion 22 extending through an opening 24 provided in the toe board 23. A conventional and typical way of mounting the booster A onto the vehicle body is to have a bolt 25 fixedly secured to the rear shell 3 which will constitute the housing I in advance, and then the booster A is set on the toe board 23 with the bolt 25 extending from the engine room C through the toe board into the passenger room D and is secured to the toe board 23 together with a pedal bracket by threading a nut 27 onto the bolt 25 from the side of the passenger compartment D. One end of a brake arm 29 is pivotably connected to the pedal bracket 28, while a brake pedal B is provided on the other end of the brake arm 29. The input rod I5 is pivotably connected to the intermediate portion of the brake arm 29.

In operation, when depressing the brake pedal B to move the input rod I5 forward, the plunger I4 is moved forward so that the valve seat I4a of the plunger I4 is separated from the poppet valve I6, thus allowing air from the atmosphere to enter the rear chamber 7 through the vent passage I7. Due to this introduction of the atmospheric air into the rear chamber 7, a pressure difference is generated between the rear chamber 7 and the front chamber 6 which is being subjected to a negative pressure, whereby a forward thrust force is caused to act on the power piston 4. This thrust force is transmitted to the output shaft II through the valve body 8 to bring about a magnification action. After that, when the depression of the brake pedal B is released, the plunger I4 moves back so that the valve seat I4a becomes seated on the poppet valve I6, while the valve seat I3a of the valve body 8 separates from the poppet valve I6 to open the negative pressure passage I3. As a result, the introduction of the atmospheric air into the rear chamber 7 is shut off while the negative pressure in the front chamber 6 is introduced into the rear chamber 7 through the negative pressure passage I3 and the vent passage I7, so that the pressure difference between the chambers is lowered, resulting in a reduction in the thrust force. The return spring 20 then acts to move back the power piston 4, the valve body 8 and so on.

The mounting structure described above, however, suffers from the following problems.

When mounting the booster A onto the toe board 23, the booster A is set on the toe board 23 with the bolt 25 previously planted on the rear shell constituting part of the housing I extending from the engine compartment side C through the hole 26 in the toe board 23 to the passenger compartment side D, and then the booster A is fixedly secured to the toe board 23 by threading the nut 27 onto the extending end of the bolt 25 on the passenger compartment D side. Namely, such a mounting structure requires a mounting operation which must be performed in a narrow space on the passenger compartment D side, thus leading to a rather inefficient mounting operation. Further, such a mounting operation requires two workers, one on the engine compartment C side and the other on the passenger compartment D side. This is a serious problem in view of the current policy of minimizing the number of workers.

UK Patent GB2I60603A discloses a mounting

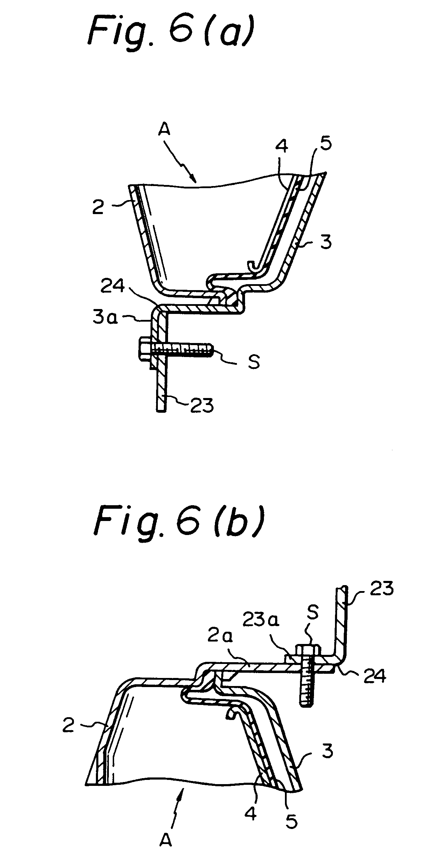

structure of a pneumatic booster in which the booster can be mounted from the engine compartment side. In one way of providing such a structure as shown in Fig. 6(a), a rear shell 3 is extended forward along the outer periphery of a front shell 2 and a radially outward extending flange 3a is provided at the forward end of the forward extension of the rear shell 3. This flange 3a is adapted to mate with and to be fixed to the toe board 23 by means of screw S. In another mounting technique shown in Fig. 6 (b), a front shell 2 extends along the outer periphery of a rear shell 3 to the rear of the rear shell 3 to form a tubular portion 2a. This tubular portion 2a is adapted to be fitted into a tubular portion 23a of a toe board 23 and to be fixed to the toe board by means of a screw S. In these cases mentioned above, however, both mounting techniques involve the whole pneumatic booster A being fitted into the hole 24 of the toe board, and the area of the hole 24 must therefore be made larger, so the space for mounting the pedal bracket 28 (see Fig. 6) is extremely limited. This limitation requires a substantial change in the design of the brake pedal mounting structure and thus raises a new problem of adding to the complication of the vehicle body structure.

EP-A-0 121 114 discloses a mounting device for a booster where a bajonet means is employed to mount a booster on a toe board. The mounting operation requires a second operator and the passenger compartment (D) side of the vehicle. The clevis mounted on the input rod is necessarily in alignment with the brake arm when the booster is set on the toe board. The second operator must hold the input rod and align the clevis with a brake arm, and then the booster body is rotated. Alternatively, the booster is first set on the toe board and rotated to be connected to the toe board. After that, the input rod must be pushed a short distance into the booster body in order to align the clevis with the brake arm and then be withdrawn to connect the clevis with the brake arm. Furthermore, it is undesirable to rotate the input rod relative to the booster body, since the input rod engages with many parts such as, for example a plunger, springs for the poppet valve and for itself, a filter and a silencer and rotation of the input rod may cause some irregularities between those parts.

Furthermore, a bajonet means usually need a detent means and a spring means for forcing the booster into a stable position and for preventing undesirable movement of the booster. The spring applies biasing force acting on the booster in the axial direction of the booster. It is inefficient to put the booster on the toe board and then rotate it while counteracting the force of the spring.

It is therefore an object underlying the present invention to provide a mounting device for mounting a pneumatic booster on a toe board of the vehicle body of a vehicle, according to the preamble part of claim 1, with which the booster can mounted much more easily.

The solution of this object is achieved by the features of new claim 1.

Various other features and advantages of the invention will become apparent upon reviewing the following descriptions in conjunction with the accompanying drawings, and appended claims.

Fig. I is a sectional view showing a pneumatic booster mounted on a toe board through a mounting device according to a first embodiment of the invention;

Fig. 2 is a partially cutaway top plan view of the pneumatic booster mounting device shown in Fig. I;

Fig. 3 is a sectional view similar to Fig. I but showing a second embodiment of the invention;

Fig. 4 is an exploded perspective view of the mounting device shown in Fig. 3;

Fig. 5 is a sectional view similar to Fig. I but showing a prior art mounting device; and

Fig.6(a) and 6(b) show other prior art mounting devices.

Referring now in detail to Figs. I to 5, preferred embodiments of the present invention will be explained. In the figures, the same reference numerals will be given to elements which are the same as those of the prior art shown in Fig. 6 and detailed explanation thereof will be omitted.

Figs. I and 2 show a first embodiment of the present invention. Reference numeral 3I designates a mounting bracket which is generally rectangular in shape. The mounting bracket 3I is fixed, by means of welding or other suitable means, to the rear portion of a rear shell 3 which constitutes a housing I of a pneumatic booster A. The mounting bracket 3I is provided at its center with an opening 32 which is adapted to allow the insertion of an axial portion 22 of the pneumatic booster A therethrough, and a pair of flange extending rearward from the upper and lower edges thereof, which flanges serve as engaging portions as will be explained later.

On the other hand, a toe board 23 of the vehicle body is provided with upper and lower pairs of tab portions 34 which extend to the engine compartment C side adjacent to an opening 24 designed to allow the extension of the axial portion 22 of the booster A to pass therethrough. The tab portions are formed by partially bending the toe board 23, and each pair of tab portions is provided on upper and lower sides of the opening 24 in spaced relationship with each other. These tab portions 34 serve as second engaging portions as will be explained later. The flanges 33 and the tab portions 34 are provided with respective holes 33a and 34a formed therein which correspond to each other and are coupled together by means of connecting elements 35 extending through the respective holes 33a and 34a. The connecting elements 35 are long size bolts. Respectively corresponding flanges 33 and tabs 34 are fastened and secured to each other by screwing nuts 36 onto respective threaded portions 35a of the bolts 35. A bolt 37 is welded in advance onto part of the toe board 23 at a position between the upper and lower tab portions 34 such as to extend to the passenger compartment D side, and a pedal bracket is adapted to be secured to the toe board 23 by screwing a nut 38 onto the bolt 37.

In the mounting of a pneumatic booster A having the structure mentioned above, the booster A is first set in such a manner that the flanges 33 of the mounting bracket 3l engage with the corresponding tab portions 34 of the toe board 23 so that respective holes 33a and 34a are aligned with each other and then the nuts 36 can be screwed onto the respective threaded portions 35a of the connecting elements 35. As is apparent from this explanation, all mounting operation of the booster A can be conducted on the engine compartment C side. On the other hand, the pedal bracket 28 can be mounted on the toe board 23 in the same manner as in a conventional case.

It is to be noted that the nuts 36 used in the embodiment mentioned above can be omitted. In that case, the insertion of the connecting member 35 through the holes 33a and 34a completes the installation of the booster A on the vehicle body, mounting efficiency thus being improved. The flanges 33 and the tab portions 34, which are disposed in the vertical direction as viewed in Fig. l in the embodiment mentioned above, may alternatively be disposed in the lateral or horizontal direction.

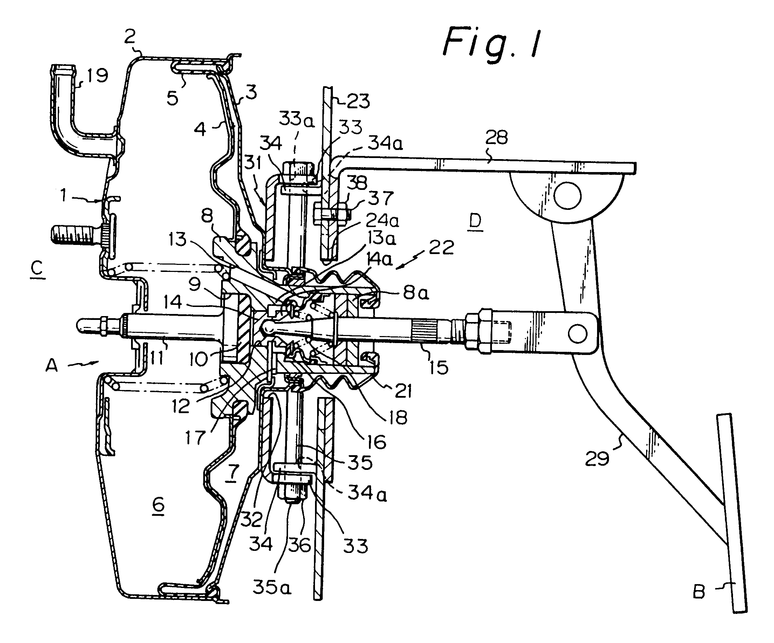

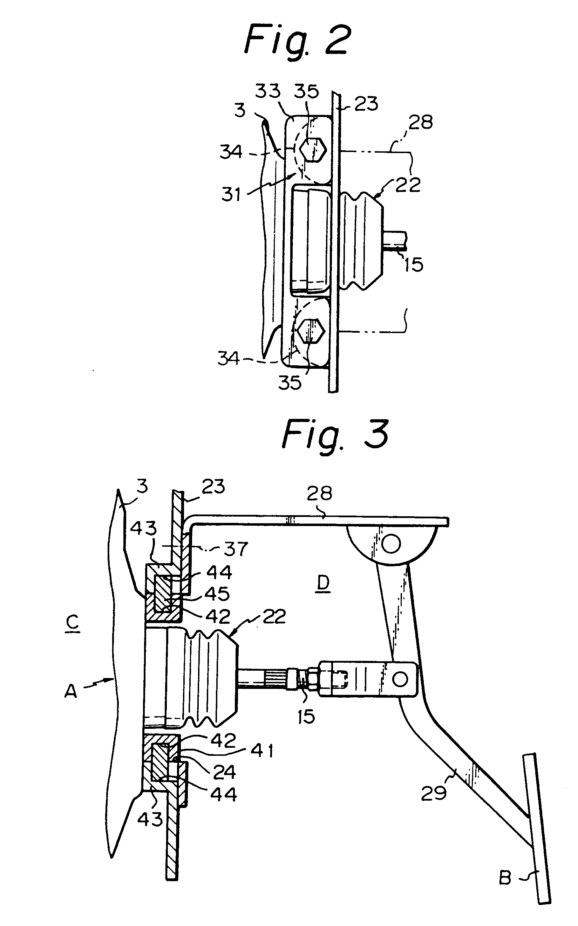

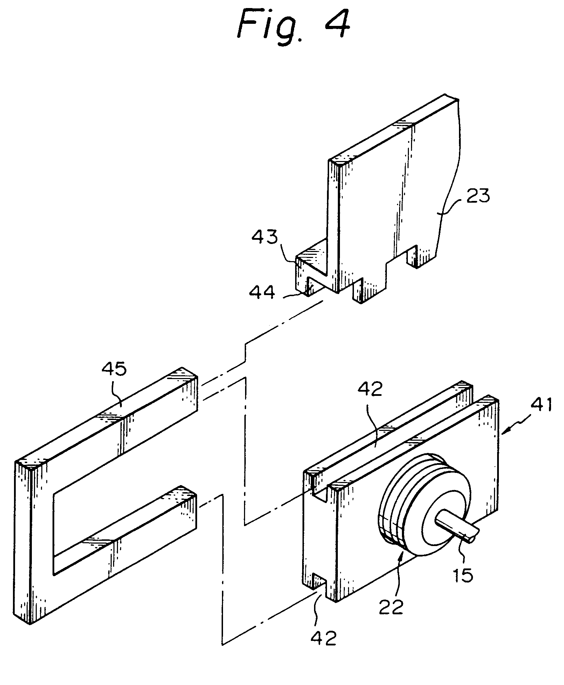

Figs. 3 and 4 show a second embodiment of the present invention. In this embodiment, first grooves 42 opening on the upper and lower sides, respectively, are provided on the upper and lower edges of a mounting bracket 4l fixedly secured to a rear shell 3 of a pneumatic booster A, while a toe board 23 of a vehicle body is provided with L-shaped projections 43 which extend to the engine compartment C side on the upper and lower sides of an opening 24 and are adapted to mate with the respective first grooves 42. The projections 43 are formed by partially bending the toe board and cooperate with the outer surface of the toe board 23 to define second grooves 44 corresponding with the respective first groove 42 and opening on the lower and upper sides, respectively. End surfaces of the upper and lower projections are each positioned at the same levels as the upper and lower inner surfaces of the opening 24 of the toe board 23, respectively, in the vertical direction as viewed in Fig. 3. Accordingly, the mounting bracket 4l can be fitted in the opening 24 with the upper and lower end surfaces of the mounting bracket 43 abutting against the corresponding surfaces of the projections 43 and the opening 24 of the toe board 23 mentioned above. In this condition, the first and second grooves together define enclosed spaces. On the other hand, a generally C-shaped connecting member 45 is formed with a shape and a set of dimensions suitable to allow insertion of the connecting member 45 into the enclosed spaces. Once the connecting member has been inserted into the spaces, it prevents the first and second engaging members from parting, while the spaces also allow the connecting member to be withdrawn therefrom.

In an operation of mounting the pneumatic booster provided with the structure mentioned above, the booster A is first set in such a manner that the mounting bracket 4l is fitted in the opening 24 of the toe board 23, and then the connecting member 45 may be inserted into the enclosed spaces defined by the first and second grooves 42 and 44, respectively. It is apparent from the above explanation that the pneumatic booster A can be mounted on the toe board from the engine compartment C side. Further, simple insertion of the connecting member 45 completes the mounting operation in this embodiment, thus affording a very easy method for mounting a pneumatic booster on a vehicle body. A pedal bracket 28 can be secured to the toe board 23 in the same way as in the case of the first embodiment by utilizing a bolt 37 fixedly secured to the toe board 23.

**Claims**

1. A mounting device for mounting a pneumatic booster (A) on a toe board (23) of the vehicle body of a vehicle such as an automobile, said pneumatic booster (A) comprising

   – a housing (1) including a rear shell (3) and
   – an axial portion (22) extending outwardly to the rear of the rear shell (3),
   – a mounting bracket (31; 41) secured to the rear of the rear shell (3)
   – with the said axial portion (22) extending through an opening (32) formed in said bracket (31; 41),
   – said mounting bracket (31; 41) comprising a first engaging member (33) formed integrally therewith,
   – said toe board (23) comprising a second engaging member (34; 43) adapted to extend to the engine compartment side (C) of the vehicle,
   – said second engaging member (34; 43) being designed to mate with and to engage with the first engaging member (33),
   – a connecting means (35; 45) being provided to connect the mating first (33) and second (34; 43) engaging members as they engage with each other to fixedly secure the mounting bracket (31; 41) to said toe board (23),
   – the dimension of the connecting means (35; 45) in the radial direction of the booster being smaller than the diameter of the booster,
**characterized** in

– that the connecting means (35; 45) is designed to be moved in a direction perpendicular to the axis of the booster in order to connect the mating engaging members (33, 34; 43),

– that the first engaging member (33) includes a first pair of engaging portions extending in respective first planes which are parallel to each other, said first engaging portions opposing each other with the axial portion of the booster (A) being interposed therebetween,

– that the second engaging member (34; 43) includes a second pair of engaging portions extending in respective second planes which are parallel to said first planes, said second engaging portions opposing each other with the axial portion of the booster (A) being interposed therebetween, and

– that one of the first and second pairs are fitted between the other of the first and second pairs and that respective mating first and second engaging portions engage with each other.

2. A mounting device according to Claim l, wherein said first and second (43) engaging members include respective grooves (42; 44) which are complementary to each other, said grooves (42; 44) being designed to define an enclosed hollow space therebetween when said first and second (43) engaging members are in mating engagement, and wherein said connecting member (45) is formed with a shape and a set of dimensions suitable to allow the insertion of said connecting member (45) into said enclosed hollow space.

**Patentansprüche**

1. Befestigungsvorrichtung zur Befestigung eines pneumatischen Bremskraftverstärkers (A) an einem Fußbrett (23) einer Fahrzeugkarosserie eines Fahrzeugs, wie etwa eines Kraftfahrzeuges, wobei der pneumatische Bremskraftverstärker (A) folgende Bauelemente aufweist:

– ein Gehäuse (1) mit einem hinteren Gehäuseteil (3), und

– einen axialen Teil (22), welches sich nach außen zu der Rückseite des hinteren Gehäuseteils (3) erstreckt,

– einen Lagerträger (31, 41), welcher an der Rückseite des hinteren Gehäuseteils (3) befestigt ist,

– wobei der axiale Teil (22) sich durch eine Öffnung (32), die in dem Träger (31, 41) ausgebildet ist, erstreckt,

– wobei der Lagerträger (31, 41) ein erstes Eingriffselement (33), welches einstückig mit diesem ausgebildet ist, umfaßt,

– wobei das Fußbrett (23) ein zweites Eingriffselement (34, 43) umfaßt, welches angepaßt ist, um sich zur Seite des Motorraums (C) des Fahrzeuges zu erstrecken,

– wobei das zweite Eingriffselement (34, 43) so ausgestaltet ist, daß es mit dem ersten Eingriffselement (33) zusammenpaßt und mit diesem in Eingriff bringbar ist,

– Verbindungsmittel (35, 45), welche vorgesehen sind, um die zusammenpassenden ersten (33) und zweiten (34, 43) Eingriffselemente zu verbinden, wenn sie sich miteinander in Eingriff befinden, um den Lagerträger (31, 41) fest an dem Fußbrett (23) zu verbinden,

– wobei die Abmessung der Verbindungsmittel (35, 45) in radialer Richtung des Bremskraftverstärkers geringer ist als der Durchmesser des Bremskraftverstärkers,

dadurch **gekennzeichnet** , daß

– die Verbindungsmittel (35, 45) so ausgebildet sind, daß sie in eine Richtung senkrecht zu der Achse des Bremskraftverstärkers bewegbar sind, um die zusammenpassenden Verbindungselemente (33, 34; 43) zu verbinden,

– daß das erste Eingriffselement (33) ein erstes Paar von Eingriffsteilen umfaßt, welche sich in jeweiligen ersten Ebenen erstrecken, welche parallel zueinander sind, wobei die ersten Eingriffsteile einander gegenüberliegen, wobei der axiale Teil des Bremskraftverstärkers (A) zwischen diesen zwischengelagert ist,

– daß das zweite Eingriffselement (34, 43) ein zweites Paar von Eingriffsteilen umfaßt, welche sich in jeweiligen zweiten Ebenen erstrecken, welche parallel zu den ersten Ebene sind, wobei die zweiten Eingriffsteile einander gegenüberliegen, wobei der axiale Bereich des Bremskraftverstärkers (A) zwischen diesen zwischengelagert ist, und

– daß eines der ersten und zweiten Paare zwischen dem anderen der ersten und zweiten Paare eingebaut ist und das jeweilige zusammenpassende erste und zweite Eingriffsteile sich miteinander in Eingriff befinden.

2. Befestigungsvorrichtung nach Anspruch 1, wobei die ersten und zweiten (43) Eingriffselemente jeweilige Nuten (42; 44) umfassen, welche komplementär zueinander sind, wobei die Nuten (42; 44) so ausgestaltet sind, daß sie einen umschlossenen Hohlraum zwischen sich bilden, wenn das erste und das zweite (43) Eingriffselement sich in zusammenpassendem Eingriff befinden, und wobei das Verbindungselement (45) mit einer Ausgestaltung und einem Satz von Abmessungen ausgebildet ist, welche geeignet sind, um die Einführung des Verbindungselements (45) in den umschlossenen Hohlraum zu ermöglichen.

## Revendications

I - Dispositif de montage pour l'installation d'un amplificateur pneumatique (A) sur le plancher incliné (23) de la caisse d'un véhicule tel qu'une automobile, ledit amplificateur pneumatique (A) comportant :

– un logement (I) comprenant une enveloppe arrière (3) et

– une portion axiale (22) s'étendant vers l'extérieur à l'arrière de l'enveloppe arrière (3) ;

– un support de montage (3I; 4I) fixé à l'arrière de l'enveloppe arrière (3),

– ladite portion axiale (22) s'étendant à travers une ouverture (32) ménagée dans ledit support (3I; 4I),

– ledit support de montage (3I; 4I) comportant un premier élément d'engagement (33) formé en une pièce avec lui,

– ledit plancher incliné (23) comportant un second élément d'engagement (34; 43) destiné à s'étendre jusqu'au côté (C) compartiment moteur du véhicule,

– ledit second élément d'engagement (34; 43) étant conçu pour s'accoupler avec le premier élément d'engagement (33) et s'engager dans lui,

– un moyen de connexion (35; 45) étant prévu pour relier les premier (33) et second (34; 43) éléments d'engagement s'accouplant alors qu'ils s'engagent l'un dans l'autre pour fixer le support de montage (3I; 4I) audit plancher incliné (23),

– la cote du moyen de connexion (35; 45) dans la direction radiale de l'amplificateur étant inférieure au diamètre de l'amplificateur,

caractérisé en ce que :

– le moyen de connexion (35; 45) est conçu pour être déplacé dans une direction perpendiculaire à l'axe de l'amplificateur de manière à relier les éléments d'engagement s'accouplant (33, 34; 43),

– le premier élément d'engagement (33) comporte une première paire de portions d'engagement s'étendant dans des premiers plans respectifs qui sont parallèles l'un à l'autre, les dites premières portions d'engagement étant opposées l'une à l'autre, la portion axiale de l'amplificateur (A) étant interposée entre elles,

– le second élément d'engagement (34; 43) comporte une seconde paire de portions d'engagement s'étendant dans des seconds plans respectifs qui sont parallèles auxdits premiers plans, lesdites secondes portions d'engagement étant opposées l'une à l'autre, la portion axiale de l'amplificateur (A) étant interposée entre elles, et

– l'une des première et seconde paires est montée entre l'autre des première et seconde paires et les premières et secondes portions respectives d'engagement s'accouplant s'engagent les unes dans les autres.

2 - Dispositif de montage selon la revendication I, dans lequel lesdits premier et second (43) éléments d'engagement comprennent des rainures respectives (42; 44) qui,sont complémentaires les unes des autres, lesdites rainures (42; 44) étant conçues pour définir entre elles un espace fermé creux lorsque lesdits premier et second (43) éléments d'engagement sont en engagement d'accouplement, et dans lequel ledit élément de connexion (45)présente une forme et un ensemble de dimensions qui sont appropriés pour permettre l'insertion dudit élément de connexion (45) dans ledit espace fermé creux.

Fig. I

EP 0 340 534 B1

# Fig. 2

# Fig. 3

# Fig. 4

# Fig. 5

EP 0 340 534 B1

# Fig. 6 (a)

# Fig. 6 (b)